Europäisches Patentamt

European Patent Office

Office européen des brevets

(11) Veröffentlichungsnummer : **0 084 645**
**B1**

(12) **EUROPÄISCHE PATENTSCHRIFT**

(45) Veröffentlichungstag der Patentschrift :
09.10.85

(21) Anmeldenummer : 82111517.7

(22) Anmeldetag : 11.12.82

(51) Int. Cl.⁴ : **C 09 D 17/00, C 09 B 67/20**

(54) **Hochkonzentrierte, nichtstaubende, feste und leicht verteilbare Pigmentpräparation und deren Verwendung.**

(30) Priorität : 29.12.81 DE 3151753

(43) Veröffentlichungstag der Anmeldung :
03.08.83 Patentblatt 83/31

(45) Bekanntmachung des Hinweises auf die Patenterteilung : 09.10.85 Patentblatt 85/41

(84) Benannte Vertragsstaaten :
CH DE FR GB IT LI NL

(56) Entgegenhaltungen :
DE-B- 2 502 839
FR-A- 2 160 507
FR-A- 2 245 739
FR-A- 2 258 438
US-A- 4 056 402
Die Akte enthält technische Angaben, die nach dem
Eingang der Anmeldung eingereicht wurden und die
nicht in dieser Patentschrift enthalten sind.

(73) Patentinhaber : BASF Aktiengesellschaft
Carl-Bosch-Strasse 38
D-6700 Ludwigshafen (DE)

(72) Erfinder : Belde, Horst
Dubliner Strasse 21
D-6700 Ludwigshafen (DE)
Erfinder : Hartmann, Eduard
Neuhofener Strasse 77
D-6703 Limburgerhof (DE)
Erfinder : Daubach, Ewald, Dr.
Thomas-Mann-Strasse 52
D-6700 Ludwigshafen (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung betrifft hochkonzentrierte, nichtstaubende, feste und leicht verteilbare Pigmentpräparationen und die Verwendung solcher Zubereitungen zur Herstellung von wäßrigen oder wäßrig-alkoholischen Druckfarben.

Wäßrig oder wäßrig-alkoholische Druckfarben enthalten in der Regel Basen wie Alkalimetallhydroxid, Ammoniak oder Amine, lösliche Harze, z. B. Kolophonium, Maleinat-, Phthalat- oder Acrylatharze, Schellack, Kasein u. a. als Bindemittel.

Aus der DE-A-2 729 892 sind feste Pigmentzubereitungen bekannt, die feinteiliges Pigment in Carbonsäuregruppen enthaltenden Polymeren auf der Basis (Meth)Acrylsäure und (Meth)Acrylsäureester enthalten. Diese Zubereitungen sind für die vorstehend genannten Druckfarben gut geeignet.

Nachteilig bei Pigmentzubereitungen der vorstehend genannten Art ist, daß man bei der Herstellung der Druckfarben nicht mehr frei in der Wahl der weiteren Binde- und/oder Hilfsmitteln ist, da nicht alle Bindemittel untereinander verträglich sind oder sich in den Eigenschaften nachteilig beeinflussen können.

Aus der FR-A-2 160 507 und der DE-B-2 502 839 sind wäßrige Zubereitungen von Pigmenten bzw. von Dispersionsfarbstoffen bekannt. Die Zubereitungen der DE-B-2 502 839 enthalten als oberflächenaktive Mittel Umsetzungsprodukte von $C_2$- bis $C_6$-Alkylendi- und -polyaminen — die Zahl der Alkylengruppen kann 1 bis 5 betragen — mit Propylenoxid (PO) und Ethylenoxid (EO), die Molekulargewichte zwischen 1 000 und 42 000, vorzugsweise zwischen 7 000 und 17 500, aufweisen und deren EO-Gehalt zwischen 30 und 80 Gew.-% liegt.

Die Zubereitungen der FR-A-2 160 507 enthalten oberflächenaktive Mittel auf der Basis Alkylendi- und -polyamine, aromatischer und cycloaliphatischer Diamine oder aliphatischer oder cycloaliphatischer Di- und Polyhydroxyverbindungen.

Eine Trocknung der wäßrigen Zubereitungen ist weder in der DE-B-2 502 839 noch in der FR-A-2 160 507 beschrieben und im letzteren Fall wegen der Wasserrückhaltemittel wohl auch kaum möglich. Auch ist diesem Stand der Technik weder ein Hinweis auf eine solche Möglichkeit enthalten noch ein solcher zu entnehmen.

In der FR-A-2 245 739 werden pulverförmige Farbstoffzubereitungen beschrieben, die α) einen in Wasser nichtlöslichen Farbstoff, β) ein anionenaktives Dispergiermittel wie Ligninsulfonat und γ) — bezogen auf α) — 2 bis 30 Gew.-% EO-Addukte enthalten. Letztere können neben anderen auch Umsetzungsprodukte von Alkylendiaminen mit 25 bis 100 Mol PO und EO je Mol Aminogruppe oder Polyethylenoxide mit Molekulargewichten zwischen 200 und 1 000 sein. In diesen Zubereitungen ist das anionenaktive Mittel β) das eigentliche Dispergiermittel und Schutzmittel für den Farbstoff. Dementsprechend ist der Anteil β) wesentlich größer als der des nichtionischen Mittels γ). In den Beispielen liegt das Verhältnis γ) : β) = 1 : 3 bis 1 : 9.

Außerdem ist bekannt, daß die EO-Addukte als solche ölige bis mehr oder minder pastöse Produkte sind, die einen niedrigen Schmelzpunkt aufweisen und nur geringe Neigung haben, aus der Schmelze zu erstarren.

Aufgabe der vorliegenden Erfindung war es, Pigmentzubereitungen bereitzustellen, welche die Nachteile der Zubereitungen des Standes der Technik nicht aufweisen.

Es wurde gefunden, daß in alkoholischen bis wäßrigen Medien universell anwendbare Pigmentpräparationen vorliegen, wenn diese — bezogen auf (a + b + c) —

a) 70 bis 95 Gew.-% mindestens eines feinteiligen Pigments,

b) 5 bis 30 Gew.-% mindestens eines oberflächenaktiven festen Mittels, das durch Umsetzen von Ethylendiamin mit Propylenoxid und dann mit Ethylenoxid erhalten wird, wobei der Ethylenoxidanteil, bezogen auf das Blockcopolymere, 30 bis 45 Gew.-% beträgt und das Blockcopolymere ein mittleres Molekulargewicht von 11 000 bis 15 000 aufweist.

c) 0 bis 5 Gew.-% eines oder mehrerer Wachse und/oder schaumverhütender Mittel und

d) gegebenenfalls weitere in Pigmentpräparationen übliche Mittel
enthalten.

Die neuen Präparationen eignen sich hervorragend zum Pigmentieren von wäßrigen, alkoholischen oder wäßrig-alkoholischen Druck- und Lackierfarben.

Die neuen Präparationen sind für die Anwendung in den unterschiedlichsten Bindemittelsystemen sehr gut geeignet. So können z. B. mit den neuen Präparationen auch Druckfarben und Lackfarben pigmentiert werden, die kationische Harze enthalten. Mit den neuen Pigmentzubereitungen erhält man Farben, die farbstarke und brillante Färbungen liefern.

Außerdem zeichnen sich die mit den Pigmentpräparationen gemäß der Erfindung hergestellten Druck- und Lackfarben durch gute Haftfestigkeit auf den verschiedensten Materialien wie Polyethylen, PVC und Aluminiumfolie, durch eine sehr gute Wasserechtheit der Drucke, durch hohen Glanz und andere ausgezeichnete coloristische Eigenschaften aus.

Diese Befunde waren überraschend. Aus der DE-OS-2 729 892 war bekannt, daß sich die Mitverwendung von oberflächenaktiven Mitteln zusammen mit Zubereitungen aus Pigmenten und Carboxylgruppen enthaltenden Copolymeren in Druck- und Lackierfarben nachteilig auswirkt, weil durch diesen Zusatz die Dispergierbarkeit und der Glanz abnehmen. Außerdem sollen nach den Angaben in dieser DE-OS mit zunehmender Konzentration an dem oberflächenaktiven Mittel auch die Farbstärke und die Transparenz negativ beeinflußt werden.

Als Pigmente (a) kommen für die Zubereitungen sowohl anorganische als auch organische in Betracht.

Als anorganische Pigmente sind z. B. zu nennen : Titandioxid, Ruß, Eisenoxide, Bleichromat-Bleimolybdat-Pigmente, Nickeltitangelbpigmente und/oder Chrom-III-oxid.

Als organische Pigmente kommen z. B. solche aus der Azoreihe, aus der Reihe der Perylentetracarbonsäurediimide, der Phthalocyanine, des Anthrachinons, der Perinone, des Thioindigo, der Dioxazine, der Isoindolinpigmente, der Ketogruppen enthaltenden polycyclischen Verbindungen mit mindestens 4 kondensierten aromatischen und/oder heteroaromatischen Ringen und/oder der Metallkomplexe in Betracht.

Die Zubereitungen können auch Gemische aus anorganischen und organischen Pigmenten enthalten.

Als oberflächenaktive Mittel (b) sind solche geeignet, die durch Umsetzen von Ethylendiamin zuerst mit Propylenoxid (PO) und dann mit Ethylenoxid (EO) erhalten werden. Das Verhältnis Propylenoxid zu Ethylenoxid wird so gewählt, daß das Umsetzungsprodukt 30 bis 45 Gew.-% EO enthält und das Umsetzungsprodukt, das ein PO/EO-Blockcopolymer ist, ein mittleres Molekulargewicht von 11 000 bis 15 000 aufweist.

Die Herstellung der Mittel (b) ist bekannt.

Die Zubereitungen können als weitere Bestandteile (c) noch Wachse, schaumverhütende Mittel oder Gemische dieser Mittel enthalten. Außerdem können die Zubereitungen noch geringe Mengen Wasser und weitere in Pigmentzubereitungen übliche Mittel (d) in untergeordneter Menge enthalten. Die Menge an (d) sollte in der Regel 5 %, bezogen auf (a + b + c), nicht überschreiten.

Die Mittel (c) verbessern die Oberfläche und die Reibfestigkeit der Färbungen, verhindern eine mögliche Schaumbildung bei der Herstellung der Farben und/oder deren Verarbeitung.

Mittel (d) sind z. B. Mittel die bei der Herstellung der Zubereitungen wie der Dispergierung der Pigmente, der Isolierung der Zubereitung als Hilfsstoffe angewendet werden. Als Zusätze für diese Zwecke sind z. B. Aluminiumhydroxid, saure Acrylharze und/oder pH-regulierende Mittel wie Puffersubstanzen, Säuren oder Basen, z. B. Sulfonsäuren, Triethanolamin zu nennen.

Die neuen Pigmentpräparationen können nach verschiedenen Verfahren in an sich bekannter Weise hergestellt werden. So können die Zubereitungen aus Pigment und dem oberflächenaktiven Mittel (b) durch Einrühren, Kneten oder Mahlen, z. B. in einer Rührwerkskugelmühle, im Attrittor, in einer Kugelmühle, einer Sand- oder Perlmühle in wäßrigem Medium und anschließendem Trocknen in üblicher Weise hergestellt werden. Das oberflächenaktive Mittel (b) wird dabei vor der Dispergierung des Pigments zugegeben.

Die neuen Präparationen sind zur Pigmentierung von Firnissen für die verschiedensten Anwendungen geeignet, z. B. zum Färben oder Bedrucken von Papier, Tapeten, Dekorpapieren, Aluminiumfolie, Weich- und Hart-PVC, Polyethylen, Polypropylen und den verschiedensten Geweben, außerdem von Leder und Kunstleder. Mit den Zubereitungen können auch Druckpasten zum Bedrucken von textilen Geweben hergestellt werden.

Die mit den neuen Präparationen pigmentierten Farben können nach dem Tiefdruck-, Flexodruck-, Siebdruck- und Pigmentdruckverfahren, sowie nach dem Spritz-, Streich- und Rakelverfahren aufgebracht werden.

Die Erfindung soll durch die folgenden Beispiele weiter erläutert werden. Die Teile und Prozentangaben beziehen sich auf das Gewicht.

Die in den Beispielen hergestellten Präparationen wurden in folgender wäßriger Flexodruckfarbe geprüft :

I.

20 Teile Pigmentpräparation werden in 80 Teile Bindemittellösung (Firnis) eingetragen und 30 min mit einem Schnellrührer gerührt.

Als Bindemittel wurde ein Gemisch aus 47 Teilen eines Carboxylgruppen enthaltenden Acrylatharzes, 25 Teilen Wasser, 25 Teilen Ethanol und 2 Teilen wäßrige Ammoniaklösung 25 %ig verwendet.

**Beispiel 1**

80 Teile Pigmentruß (BET-Oberfläche 83 m²/g) und 20 Teile oberflächenaktives Mittel (erhalten durch Umsetzen von Ethylendiamin mit PO und dann mit EO ; EO-Gehalt : 40 % ; M̄ 12 500) werden nach dem Zugeben von 200 Teilen Wasser in einer Rührwerkskugelmühle gemahlen (5 Passagen).

Die wäßrige Dispersion wird durch Sprühtrocknung in ein Pulver überführt.

Die Pigmentpräparation enthält 80 % Ruß. Mit der unter I angegebenen Flexodruckfarbe erhält man farbstarke und glänzende schwarze einwandfreie Drucke auf Papier und auf Aluminiumfolie.

**Beispiel 2**

160 Teile C.I. Pigment Orange 34 ; C.I. Nr. 21 115 wurden in eine Lösung von 40 Teilen Blockcopolymer (erhalten durch Umsetzen von Ethylendiamin mit PO und dann mit EO ; EO-Gehalt 40 %, M̄ 12 500) in 400 Teile Wasser eingerührt und in einer Rührwerkskugelmühle dispergiert (5 Passagen). Die Zubereitung wurde durch Sprühtrocknung isoliert.

Diese 80 % Pigment enthaltende Präparation gab auf Papier im Flexodruck farbstarke orange Färbungen.

**Beispiel 3**

80 Teile C.I. Pigment Red 48 ; C.I. Nr. 15 865 wurden unter Zusatz von 300 Teilen Wasser und 20 Teilen des in Beispiel 2 angegebenen Blockcopolymeren in einer Rührwerkskugelmühle dispergiert (3 Passagen). Das Wasser wurde durch Gefriertrocknung entfernt.

Es wurde eine 80 % Pigment enthaltende Präparation erhalten, die im Flexodruck farbstarke, glänzende Rotfärbungen auf Aluminiumfolie ergibt.

Beispiel 4

20 Teile oberflächenaktives Mittel (erhalten durch Umsetzen von Ethylendiamin mit PO und dann mit EO ; EO-Gehalt : 40 % ; M̄ 12 500) wurden in 200 Teilen Wasser gelöst. Dann wurden 80 Teile C.I. Pigment Red 48 : 1 ; C.I. Nr. 15 865 : 1 zugegeben und die Suspension in einem Attritor 2 Stunden gemahlen. Als Mahlkörper wurden Siliquarzitkugeln mit einem Durchmesser von 0,6 bis 0,8 mm verwendet. Die Dispersion wurde von den Mahlkörpern abgetrennt und die Zubereitung durch Sprühtrocknung isoliert.

Die pulverförmige Zubereitung, die 80 % Pigment enthält, ergab auf Aluminiumfolie brillante Rotfärbungen.

Beispiel 5

270 Teile Pigment White 6, C.I. Nr. 77 891 und 30 Teile des in Beispiel 4 angegebenen oberflächenaktiven Mittels werden unter Zusatz von 41 Teilen Wasser 1 Stunde geknetet. Das Knetgut hatte dann eine Temperatur von 63 °C.

Es wurde zu einem Film gewalzt, bei 40 bis 45 °C getrocknet und gemahlen.

Die 90 % Pigment enthaltende Zubereitung ist staubfrei und rieselfähig. Mit der unter I angegebenen Flexodruckfarbe werden einwandfreie Drucke auf Papier, Aluminium- oder Polyethylenfolie erhalten.

Beispiel 6

400 Teile Pigment Green 7, C.I. Nr. 74 260, 15 Teile Aluminiumhydroxid und 85 Teile des in Beispiel 4 angegebenen Mittels werden unter Zusatz von 100 Teilen Wasser geknetet. Dauer : 1 Stunde ; Temperatur 82 °C. Es wurde zu einem Film gewalzt, bei 40 °C getrocknet und gemahlen. 35 Teile dieser 80 % Pigment enthaltenden Präparation werden in 965 Teile einer Emulsion der folgenden Zusammensetzung eingerührt.

775 Teile Wasser
5 Teile des in der Präparation enthaltenen oberflächenaktiven Mittels,
5 Teile Ammoniak 25 %ig,
50 Teile selbstvernetzendes Polymerisat auf Acrylatbasis,
30 Teile einer 30 %igen wäßrigen Lösung eines synthetischen Verdickungsmittels und
100 Teile einer wäßrigen Dispersion eines selbstvernetzenden Mischpolymerisats auf Acrylatbasis

Diese Druckpaste wird nach den üblichen Verfahren auf die Fasermaterialien aufgedruckt. Nach dem Trocknen und Fixieren (5 Minuten bei 140 °C) werden farbstarke und brillante Drucke mit guten Echtheiten erhalten.

Beispiel 7

96 Teile Pigmentruß (BET-Oberfläche 110 m²/g), 21,6 Teile des in Beispiel 4 angegebenen oberflächenaktiven Mittels und 2,4 Teile Triethanolamin werden unter Zusatz von 45 Teilen Wasser 2 Stunden geknetet. Am Ende der Knetung hatte das Knetgut eine Temperatur von 55 °C.

Die 80 % Ruß enthaltende Pigmentpräparation liefert in der unter I angegebenen Flexodruckfarbe eine Farbe, die auf Aluminiumfolie tiefschwarze hochglänzende Drucke gibt.

Beispiel 8

80 Teile Pigment Red 48 : 1, C.I. No. 15 865 : 1, 3 Teile eines Copolymerisats aus 60 Teilen Styrol und 40 Teilen Acrylsäure (Säurezahl 250 ; M̄ 1 000) und 17 Teile des in Beispiel 4 angegebenen Mittels werden unter Zusatz von 14 Teilen i-Propanol 1 Stunde geknetet, wobei sich am Ende der Knetung eine Produkttemperatur von 73 °C einstellte. Das über eine Friktionswalze zu einem Film ausgewalzte Knetgut wurde bei ca. 40 °C getrocknet und zu einem grießförmigen Produkt zerkleinert.

Mit dieser 80 % Pigment enthaltenden Präparation und der unter I beschriebenen Flexodruckfarbe erhält man eine Farbe, die farbstarke, brillante und wasserfeste rote Drucke auf Polyethylenfolien liefert.

Beispiel 9

180 Teile feinteiliges Rohkupferphthalocyanin (erhalten durch Mahlen von rohem CuPc in einer Kugelmühle in Abwesenheit von Mahlhilfsmitteln ; Mahldauer : 10 Stunden ; BET-Oberfläche des Mahlgutes : 7 m²/g) und 120 Teile Pigment Blue 27, C.I. 77 510 werden gemeinsam mit 75 Teilen des in Beispiel 4 angegebenen oberflächenaktiven Mittels und 65 Teilen Wasser 3 Stunden geknetet. Am Ende war die Temperatur des Knetgutes auf 90 °C gestiegen. Das Knetgut wurde zu einem Film gewalzt, dieser bei 40 °C getrocknet und gemahlen.

Die Pigmentpräparation liefert als Flexodruckfarbe auf Aluminiumfolie farbstarke, brillante und glänzende rotstichig blaue Drucke.

Beispiel 10

80 Teile Pigment Red 102, C.I. 77 491 und 20 Teile des in Beispiel 1 genannten oberflächenaktiven Mittels werden mit 17 Teilen Wasser 1 Stunde geknetet. Dabei stellt sich eine Temperatur von 70 °C ein. Das Knetgut wird mittels Friktionswalze zu einem Film angewalzt, dieser bei 40 °C getrocknet und gemahlen.

Diese 80 % Pigment enthaltende Präparation gibt mit dem unter I angegebenen Bindemittel eine Druckfarbe, die auf Papier und Aluminiumfolie farbstarke gelbbraune Drucke liefert.

Beispiel 11

60 Teile Pigment Blue 15 : 1, C.I. 74 160 und 15 Teile des in Beispiel 4 angegebenen oberflächenaktiven Mittels werden unter Zusatz von 18 Teilen Wasser 2 Stunden geknetet. Die Endtemperatur des Knetguts lag bei 60 °C. Das Knetgut wurde zu einem Film gewalzt, dieser bei 45 °C getrocknet und zu einem griesförmigen Produkt zerkleinert.

Die 80 % Pigment enthaltende Präparation gibt in dem unter I beschriebenen Flexodruckfirnis eine Druckfarbe, die auf Aluminiumfolien, auf Polyethylenfolien und auf Papier brillante blaue Drucke liefert.

Durch Einrühren in die in Beispiel 6 angegebene Emulsion erhält man eine Druckpaste, die auf Geweben brillante blaue Drucke liefert.

## Patentansprüche

1. Hochkonzentrierte, nichtstaubende feste Pigmentpräparation bestehend aus — bezogen auf (a + b + c) —

a) 70 bis 95 Gew.% mindestens einem feinteiligen Pigment,

b) 5 bis 30 Gew.% mindestens einem grenzflächenaktiven Mittel, das durch Umsetzen von Ethylendiamin mit Propylenoxid und dann mit Ethylenoxid erhalten wird, wobei der Ethylenoxidanteil, bezogen auf das Blockcopolymere, 30 bis 45 Gew.% beträgt und das Blockcopolymere ein mittleres Molekulargewicht von 11 000 bis 15 000 aufweist,

c) 0 bis 5 Gew.% eines oder mehrerer Wachse und/oder schaumverhütenden Mitteln und

d) — bezogen auf (a + b + c) — bis zu 5 Gew.% an weiteren in Pigmentpräparationen üblichen Mitteln.

2. Pigmentpräparation gemäß dem Anspruch 1, dadurch gekennzeichnet, daß (a) ein feinteiliges anorganisches oder organisches Pigment ist.

3. Pigmentpräparation gemäß Anspruch 1, dadurch gekennzeichnet, daß diese als (a) Titandioxid-, Ruß-, Eisenoxid-, Bleichromat-Bleimolybdat-, Nickeltitangelb- und/oder Chrom-IIIoxidpigmente enthalten.

4. Pigmentpräparation gemäß Anspruch 1, dadurch gekennzeichnet, daß diese als (a) Pigmente aus der Reihe der Azofarbstoffe, der Perylenetetracarbonsäurediimide, der Phthalocyanine, der Anthrachinone, der Perinone, des Thioindigo, der Dioxazine, der Isoindolinpigmente, der Ketogruppen enthaltenden polycyclischen Verbindungen mit mindestens 4 kondensierten aromatischen und/oder heteroaromatischen Ringen und/oder der Metallkomplexe enthalten.

5. Verwendung der Pigmentpräparationen gemäß den Ansprüchen 1, 2, 3 oder 4 zum Pigmentieren von wäßrigen, alkoholischen oder wäßrig-alkoholischen Druck- und Lackfarben.

## Claims

1. A highly concentrated, dust-free, solid pigment formulation comprising

a) from 70 to 95 % by weight of one or more finely divided pigments, and

b) from 5 to 30 % by weight of one or more surfactants obtained by reacting ethylene diamine with propylene oxide and then reacting the product with ethylene oxide, the block copolymer containing from 30 to 45 % by weight, based on the block copolymer, of ethylene oxide units and having a mean molecular weight of from 11,000 to 15,000,

c) from 0 to 5 % by weight of one or more waxes and/or antifoams, and

d) up to 5 % by weight of other agents usually used in pigment formulations, the percentages being based on (a + b + c).

2. A pigment formulation as claimed in claim 1, wherein (a) is a finely divided inorganic or organic pigment.

3. A pigment formulation, as claimed in claim 1, containing, as (a), titanium dioxide pigments, carbon black pigments, iron oxide pigments, lead chromate/lead molybdate pigments, nickel titanium yellow pigments and/or chromium (III) oxide pigments.

4. A pigment formulation, as claimed in claim 1, containing, as (a), pigments from the series of the azo dyes, the perylenetetracarboxylic acid diimides, the phthalocyanines, the anthraquinones, the perinones, thioindigo, the dioxazines, the isoindoline pigments, polycyclic compounds containing keto groups and at least 4 fused aromatic and/or heteroaromatic rings and/or the metal complexes.

5. The use of a pigment formulation as claimed in claim 1, 2, 3 or 4 for pigmenting aqueous, alcoholic or aqueous-alcoholic printing inks and surface coatings.

## Revendications

1. Préparations pigmentaires solides, très concentrées, ne donnant pas de poussière, se composant — par rapport à (a + b + c) — de :

a) 70 à 95 % en poids d'au moins un pigment finement divisé,

b) 5 à 30 % en poids d'au moins un agent tensio-actif qui est obtenu par réaction d'éthylènediamine avec l'oxyde de propylène, puis avec l'oxyde d'éthylène, la proportion d'oxyde d'éthylène, par rapport au copolymère séquencé, étant de 30 à 45 % en poids et le copolymère séquencé présentant un poids moléculaire moyen de 11 000 à 15 000,

c) 0 à 5 % en poids d'une ou de plusieurs cires et/ou agents antimousse et

d) jusqu'à 5 % en poids — par rapport à (a + b + c) — d'autres agents utilisés classiquement dans des préparations pigmentaires.

2. Préparation pigmentaire selon la revendication 1, caractérisée en ce que (a) est un pigment inorganique ou organique finement divisé.

3. Préparation pigmentaire selon la revendication 1, caractérisée en ce qu'elle contient, en tant que composant (a), du blanc de titane, du noir de carbone, des pigments d'oxyde de fer, de chromate de plomb-molybdate de plomb, de jaune de titane-nickel et/ou d'oxyde chromique.

4. Préparation pigmentaire selon la revendication 1, caractérisée en ce qu'elle contient, en tant que composant (a), des pigments de la série des colorants azoïques, des diimides d'acide pérylène-tétracarboxylique, des phtalocyanines, des anthraquinones, des périnones, du thio-indigo, des dioxazines, des pigments iso-indoliniques, des composés polycycliques contenant des groupes céto et comportant au moins 4 noyaux aromatiques et/ou hétéro-aromatiques condensés et/ou des complexes métalliques.

5. Utilisation des préparations pigmentaires selon l'une quelconque des revendications 1 à 4 pour la pigmentation d'encres d'imprimerie et de peintures-émail aqueuses, alcooliques ou hydroalcooliques.